# FASCICULE DE BREVET EUROPEEN

(11) **EP 0 814 555 B1**
(45) Date de publication et mention de la délivrance du brevet: **27.10.2004**
(21) Numéro de dépôt: 97410061.2
(22) Date de dépôt: 13.06.1997
(51) Int. Cl.: H02H 1/06

(54) **Dispositif de protection différentielle**
Differentialschutz
Differential protection device

(30) Priorité: 20.06.1996 FR 9607895
(43) Date de publication de la demande: 29.12.1997
(73) Titulaire: Schneider Electric Industries SAS, 92500 Rueil-Malmaison (FR)
(72) Inventeur: Tian, Simon, 38050 Grenoble Cedex 09 (FR)
(74) Mandataire: Jouvray, Marie-Andrée

(56) Documents cités:
- WO-A-95/32536
- DE-U- 29 501 280

## Description

L'invention concerne un dispositif de protection différentielle comportant des contacts principaux pour interrompre la circulation de courant électrique dans des conducteurs principaux d'un réseau, un capteur de courant de défaut différentiel disposé sur les conducteurs principaux, une unité de traitement connectée au capteur de courant de défaut, un relais de déclenchement connecté à l'unité de traitement commandant l'ouverture des contacts principaux si un défaut différentiel apparaît, et un circuit d'alimentation connecté aux conducteurs principaux et à l'unité de traitement pour fournir une tension électrique d'alimentation à l'unité de traitement.

Les dispositifs de protection différentielle dits à propre courant, notamment des disjoncteurs ou des interrupteurs, assurent une protection différentielle d'une installation électrique même en absence de tension d'alimentation. Dans cette protection à sécurité positive, les disjoncteurs ou les interrupteurs ouvrent leurs contacts principaux dès qu'un défaut d'isolement ou une fuite de courant vers la terre apparaît.

Cependant, les dispositifs à propre courant ne disposent pas d'énergie suffisante pour pouvoir intégrer des fonctions supplémentaires, notamment la détection de courts-circuits entre le conducteur de neutre et la terre. Pour augmenter l'énergie électrique disponible et assurer le fonctionnement de fonctions supplémentaires, il est connu d'utiliser dans des dispositifs de protection différentielle des alimentations auxiliaires. De manière connue ces alimentations sont connectées au réseau à protéger.

Les alimentations auxiliaires fournissent de l'énergie électrique à des circuits électroniques de déclenchement. Cependant, si l'énergie fournie n'est plus suffisante, la protection différentielle ne peut plus être assurée. Dans ce cas, le dispositif n'est plus en sécurité positive. Ce manque de protection n'est pas admis dans certaines installations électriques.

Pour garantir une sécurité positive de l'installation électrique, certains dispositifs, notamment des disjoncteurs, ouvrent leurs contacts principaux lorsque la protection différentielle ne peut plus être assurée. Ces disjoncteurs permettent une sécurité élevée pour la protection différentielle, mais perturbent la continuité de service de l'installation électrique. Par exemple, après une coupure de la tension d'alimentation qui fait ouvrir les disjoncteurs, une fermeture manuelle desdits disjoncteurs est nécessaire.

Un tel dispositif est connu par exemple du document WO-A-9 532 536.

L'invention a pour but un dispositif de protection différentielle à alimentation auxiliaire garantissant une sécurité positive et une continuité de service.

Le but est atteint par le fait que le dispositif de protection différentielle comporte un dispositif de surveillance connecté au circuit d'alimentation pour surveiller la tension d'alimentation fournie à l'unité de traitement, et un relais de commande connecté au dispositif de surveillance pour commander en fonction de la tension d'alimentation de l'unité de traitement l'ouverture et la fermeture de contacts disposés sur le circuit principal.

Avantageusement, la fermeture du circuit principal par le relais de commande est empêchée si l'ouverture dudit circuit principal est effectuée par le relais de déclenchement.

Dans un mode préférentiel de réalisation le dispositif de surveillance comporte des moyens de comparaison, connectés au circuit d'alimentation et au relais de commande, pour commander l'ouverture de contacts du circuit principal si la tension d'alimentation est inférieure à un premier seuil prédéterminé ou pour commander la fermeture desdits contacts si ladite tension est supérieure à un second seuil prédéterminé.

Selon un mode particulier de réalisation, le dispositif de protection différentielle comporte des moyens de stockage d'énergie électrique connectés au circuit d'alimentation.

Dans un premier développement de l'invention, le relais de déclenchement actionne des premiers contacts principaux, et le relais de commande actionne des seconds contacts principaux connectés en série avec les premiers contacts principaux et les conducteurs du circuit principal.

Dans un second développement de l'invention, le relais de déclenchement et le relais de commande actionnent les mêmes contacts principaux à travers un dispositif de verrouillage, le dispositif de verrouillage empêchant la fermeture des contacts principaux par le relais de commande si l'ouverture a été commandée par le relais de déclenchement, ou la fermeture par un organe de manoeuvre manuelle si le relais de commande et en commande d'ouverture.

Par exemple, les contacts principaux ont une position fermée, une première position ouverte où l'écartement des contacts principaux est à une première distance, et une seconde position ouverte où l'écartement des contacts principaux est à une seconde distance, la première position ouverte étant commandée par le relais de commande et la seconde position ouverte étant provoquée par le relais de déclenchement.

De préférence, le relais de commande est de type bistable.

Le dispositif de protection différentielle peut comporter des moyens de blocage connectés entre le dispositif de surveillance et l'unité de traitement pour empêcher la commande du relais de déclenchement si la tension d'alimentation devient inférieure au premier seuil prédéterminé.

Dans un développement d'un mode préférentiel de réalisation, le dispositif de protection différentielle comporte un micro-contrôleur comportant un microprocesseur et un convertisseur analogique-numérique, le convertisseur comportant une première entrée connectée au circuit d'alimentation pour recevoir un signal représentatif de la tension d'alimentation, une seconde entrée connectée au capteur de courant différentiel à travers un convertisseur courant-tension, et une sortie connectée à une entrée du microprocesseur, le microprocesseur comportant une sortie connectée au relais de déclenchement, et une sortie connectée au relais de commande.

De préférence, le microprocesseur comporte une sortie connectée à un enroulement d'un transformateur d'injection de courant de mesure dans les conducteurs principaux.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
La figure 1 représente un dispositif de protection différentielle à propre courant de type connu,
La figure 2 représente un dispositif de protection différentielle à alimentation auxiliaire de type connu,
La figure 3 représente le schéma d'un dispositif de protection différentielle selon un premier mode de réalisation de l'invention,
La figure 4 représente le schéma d'un dispositif de protection différentielle selon un second mode de réalisation de l'invention,
La figure 5 représente un contact principal pouvant être utilisé dans un dispositif de selon la figure 4,
Les figures 6 et 7 représentent deux schémas de circuits de protection différentielle pour des dispositifs selon l'invention.

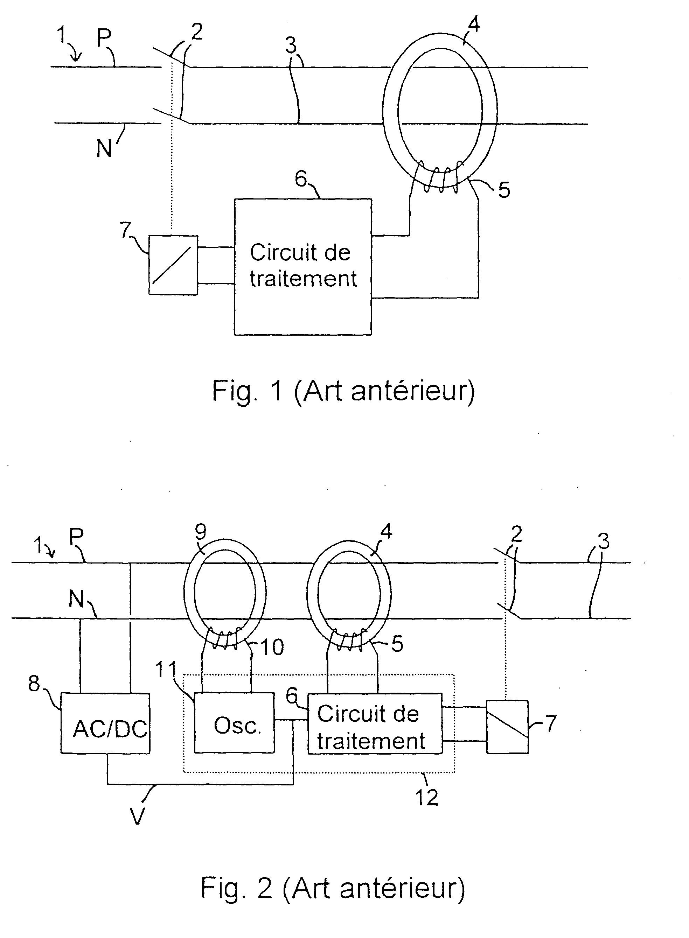

Le schéma de la figure 1 montre un dispositif de protection différentielle de type connu à propre courant installé sur un réseau 1 à protéger. Le dispositif de protection différentielle comporte des contacts principaux 2 pour interrompre le courant dans des conducteurs principaux 3 du réseau. Un transformateur de courant 4 comporte un circuit magnétique qui entoure l'ensemble des conducteurs du réseau. Ce transformateur de courant détecte le courant différentiel circulant dans les conducteurs d'une installation à protéger. Si un défaut apparaît, le transformateur génère dans un enroulement secondaire 5 un courant proportionnel au courant de fuite dans les conducteurs principaux. L'enroulement secondaire 5 est connecté à un circuit électronique 6 de traitement. Ce circuit de traitement commande un relais 7 de déclenchement lorsque le courant secondaire représentatif d'un défaut dépasse un seuil prédéterminé pendant un temps prédéterminé. Le relais 7 de déclenchement provoque l'ouverture des contacts principaux 2.

La figure 2 montre un schéma d'un autre dispositif de protection différentielle de type connu comportant une alimentation auxiliaire fournissant une tension V. Un circuit 8 d'alimentation est connecté à des conducteurs du réseau 1, par exemple un conducteur de phase P et un conducteur de neutre N. Dans ce dispositif il est possible d'ajouter des fonctions supplémentaires, notamment la détection de courts-circuits entre le neutre et la terre.

Le dispositif de la figure 2 comporte un second transformateur 9 de courant en forme de tore entourant l'ensemble des conducteurs principaux. Ce transformateur comporte un enroulement 10 connecté à un circuit oscillant 11 alimenté par le circuit 8 d'alimentation. Le circuit oscillant 11 génère un courant alternatif qui circule dans l'enroulement 10 du transformateur 9. Si un court-circuit apparaît entre le conducteur de neutre N et la terre, un courant induit par le transformateur 9 dans les conducteurs principaux circule dans le réseau, entre le conducteur neutre et la terre.

Le premier transformateur 4 détecte le passage de ce courant induit et fournit un signal de défaut au circuit 6 de traitement. Le circuit de traitement commande alors le relais 7 qui déclenche l'ouverture des contacts 2.

Le circuit oscillant 11 et le circuit de traitement 6 sont de préférence associés dans une unité de traitement 12. Cette unité de traitement, alimentée par le circuit d'alimentation 8, permet de détecter les défauts différentiels dus à des courants de fuite entre des conducteurs principaux et la terre, ou des défauts dus à des courts-circuits entre le neutre et la terre.

Les courts-circuits entre le neutre et la terre ne gênèrent pas de courants de fuite mais provoquent la circulation de courants induits injectés par le second transformateur. Dans les deux cas, les défauts sont détectés par le premier transformateur 4 et traités par le circuit de traitement 6.

Si la tension V d'alimentation fournie par circuit 8 n'est plus suffisante, la protection différentielle n'est plus garantie. Pour avoir une sécurité positive, le dispositif de protection différentielle doit alors être ouvert. Ensuite, les contacts du dispositif sont fermés par une manoeuvre manuelle pour alimenter l'installation électrique à laquelle il est connecté. Ce fonctionnement ne garantit pas une continuité de service suffisante.

Dans un dispositif de protection différentielle selon l'invention, si l'ouverture des contacts est aussi provoquée par une diminution de la tension d'alimentation, la fermeture des contacts principaux est commandée automatiquement lorsque la tension d'alimentation est rétablie. Si un défaut électrique provoque le déclenchement de l'ouverture des contacts, une intervention par des organes de manoeuvre manuels est alors nécessaire. La fermeture des contacts est réalisée si la tension d'alimentation est suffisante pour assurer la protection différentielle.

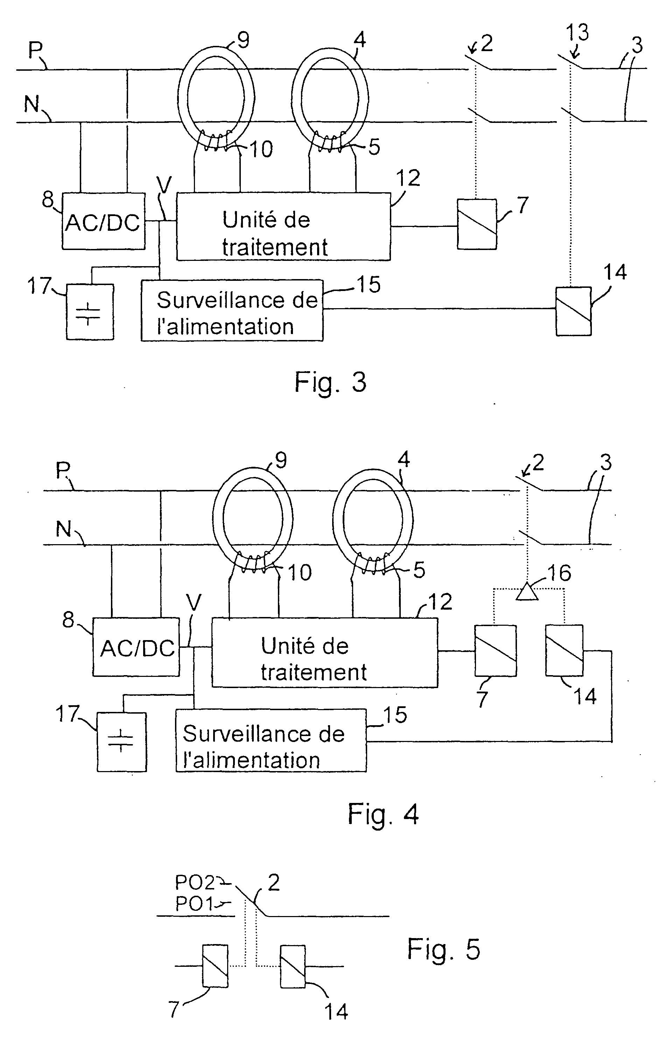

La figure 3 montre un mode de réalisation d'un dispositif de protection différentielle selon un premier mode de réalisation de l'invention. Le dispositif comporte des premiers contacts principaux 2 connectés en série avec des seconds contacts 13 sur les conducteurs principaux 3.

Les premiers contacts sont commandés en ouverture par le relais de déclenchement 7 et refermés par une commande manuelle. Les seconds contacts 13 sont commandés en fermeture et en ouverture par un relais de commande 14.

Le dispositif de protection différentielle comporte un dispositif 15 de surveillance de l'alimentation électrique connecté au circuit d'alimentation 8 et au relais de commande 14.

Le dispositif de surveillance 15 contrôle la tension V électrique fournie par le circuit 8. Si la tension devient inférieure à une première valeur prédéterminée, le dispositif de surveillance 15 commande le relais 14 pour ouvrir les contacts 13. Puis, lorsque la tension d'alimentation devient supérieure à une seconde valeur prédéterminée, supérieure à la première, le dispositif de surveillance 15 commande le relais 14 pour fermer les contacts 13.

Le relais 14 est de préférence de type bistable pour limiter la consommation d'énergie électrique.

Pour un bon fonctionnement, le circuit d'alimentation 8 doit être connecté en amont des seconds contacts 13.

Le relais 7 de déclenchement commandé par l'unité de traitement 12 déclenche l'ouverture des premiers contacts principaux 2 si un défaut électrique est détecté.

Un dispositif de protection différentielle comme celui de la figure 3, comportant des contacts en série, a une résistance de contact plus grande. Cette résistance risque d'augmenter l'échauffement si le volume disponible est très faible. L'adjonction de contacts supplémentaires en série risque aussi de faire augmenter le coût de fabrication du dispositif.

Dans un dispositif de protection différentielle selon un second mode de réalisation de l'invention, représenté sur le schéma de la figure 4, des contacts 2 principaux uniques sont commandés par les relais 7 de déclenchement et 14 de commande.

Un dispositif de verrouillage 16, disposé entre le relais 7 de déclenchement, le relais 14 de commande et les contacts 2 principaux, permet de verrouiller la fermeture automatique par le relais 14 de commande lorsqu'une ouverture des contacts 2 a été provoquée par le relais de déclenchement. Ainsi, le relais de déclenchement agit sur le dispositif de verrouillage pour bloquer les commandes provenant du relais 14 de commande. Pour que le relais 14 de déclenchement puisse commander de nouveau les contacts 2 principaux, une fermeture manuelle des contacts 2 est nécessaire. Tant qu'il n'y a pas de défaut de protection différentielle, le relais de déclenchement 7 n'est pas commandé et le dispositif de surveillance de l'alimentation peut commander le relais 14 pour fermer ou ouvrir les contacts 2 principaux en fonction de la tension V d'alimentation fournie par le circuit 8 d'alimentation.

Le dispositif de verrouillage 16 permet aussi d'empêcher la fermeture des contacts principaux par une commande manuelle si le relais de commande est en commande d'ouverture. Par exemple, lorsque la tension n'est pas suffisante pour alimenter l'unité de traitement. Ainsi, la fermeture est effectuée uniquement si la protection différentielle peut être assurée.

Les commandes manuelles pour commander la fermeture ou l'ouverture des contacts 2 concernent aussi les télécommandes commandées à distance. En particulier, les commandes associées à des disjoncteurs ou des interrupteurs qui agissent sur les organes de manoeuvre des contacts.

Le dispositif de protection différentielle représenté sur la figure 4 cumule les avantages des contacts principaux uniques et du contrôle de l'ouverture desdits contacts en fonction de la valeur de la tension V d'alimentation fournie à l'unité de traitement.

Pour éviter que le relais de commande 14 soit commandé pour ouvrir les contacts lorsque la tension du réseau baisse ou disparaît pendant de courts instants, le dispositif de protection comporte des moyens 17 de stockage de l'énergie électrique connectés au circuit 8 d'alimentation. Ces moyens 17 de stockage sont de préférence des condensateurs de forte capacité. Ils peuvent aussi être remplacés par des accumulateurs ou des piles. L'énergie stockée peut par exemple, permettre un fonctionnement de quelques secondes à quelques minutes de l'unité de traitement lorsque la tension du réseau n'est plus présente.

La figure 5 représente une variante d'un mode de réalisation des contacts 2 et d'un dispositif de verrouillage 16 pouvant être utilisés dans un dispositif de protection selon la figure 4. Les contacts 2 comportent une position fermée, une première position ouverte P01 ayant une première distance d'ouverture entre les contacts, et une seconde position ouverte P02 ayant une seconde distance d'ouverture entre les contacts. De préférence, la seconde distance d'ouverture est supérieure à la première distance d'ouverture.

Lorsque le relais 14 commande les contacts 2, l'ouverture et la fermeture se font automatiquement entre la première position P01 ouverte et la position fermée. Une faible distance est suffisante car un pouvoir de coupure élevé n'est pas indispensable. Si le relais 7 de déclenchement commande l'ouverture des contacts sur défaut électrique, les contacts sont ouverts jusqu'à la seconde position ouverte P02. Cette ouverture à une distance élevée permet un grand pouvoir de coupure. Dans cette position ouverte, le dispositif de verrouillage accroche les contacts en position ouverte et ne permet plus la fermeture automatique par le relais 14. Une fermeture manuelle ou par des organes de manoeuvre remet les contacts 2 en position fermée et la commande par le relais 14 redevient possible.

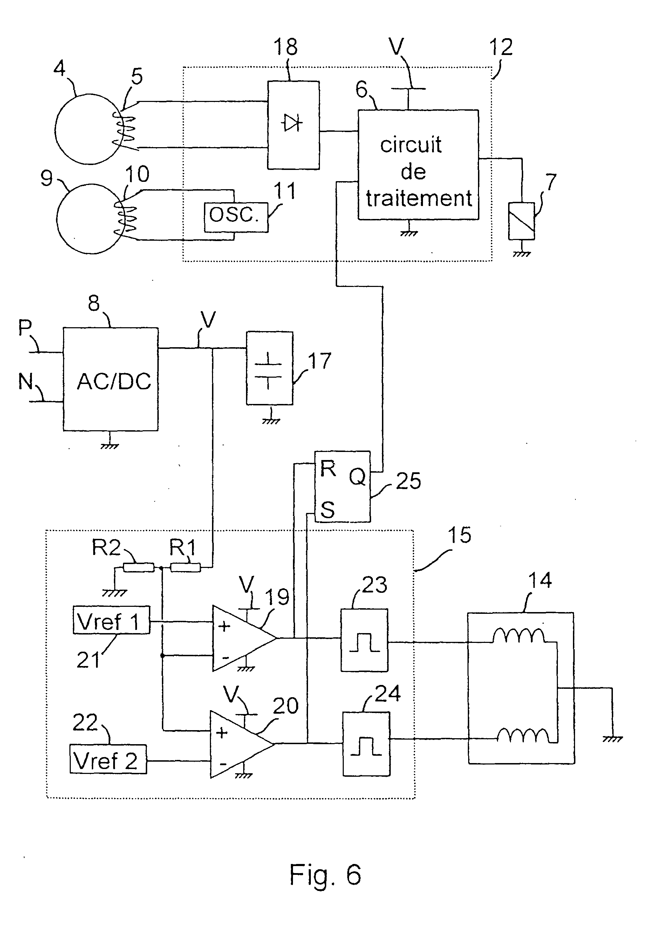

Le schéma de la figure 6 représente un premier mode de réalisation particulier de circuits électroniques pouvant être mis en oeuvre dans des dispositifs de protection différentielle selon l'invention.

L'unité de traitement 12 comporte un redresseur 18 connecté entre l'enroulement secondaire 5 du premier transformateur et le circuit de traitement 6 pour redresser le signal représentatif d'un défaut électrique. L'oscillateur 11 est connecté à l'enroulement 10 du transformateur 9.

Le circuit d'alimentation 8 est connecté aux conducteurs principaux P et N en amont des contacts 2 et fournit une tension d'alimentation entre une ligne d'alimentation V et la masse électrique des circuits. Les moyens 17 de stockage d'énergie électrique sont connectés entre la ligne V et la masse pour continuer à fournir de l'énergie lorsque le circuit 8 d'alimentation n'est plus alimenté.

Le dispositif de surveillance 15 de la tension d'alimentation V comporte deux comparateurs de tension 19 et 20 connectés à deux références de tension, respectivement 21 et 22. Un pont diviseur, formé par deux résistances R1 et R2 connectées en série entre la ligne V et la masse et ayant un point commun connecté à des entrées des comparateurs 19 et 20, fournit audits comparateurs une tension représentative de la tension d'alimentation V.

Si l'entrée inverseuse du comparateur 19 recevant la tension représentative de la tension d'alimentation devient inférieure à la tension de la première référence 21 connectée à l'entrée non-inverseuse du comparateur 19, la sortie du comparateur 19 passe à l'état haut et commande une bobine du relais 14 à travers un calibreur 23. Le calibreur 23 limite la durée de l'impulsion électrique qui commande la première bobine d'ouverture du relais 14.

Dans ce mode de réalisation, le relais 14 bistable a une première bobine de fermeture et une seconde bobine d'ouverture.

Si l'entrée non inverseuse du comparateur 20 recevant la tension représentative de la tension d'alimentation devient supérieure à la tension de la seconde référence 22 connectée à l'entrée inverseuse du comparateur 20, la sortie du comparateur 20 passe à l'état haut et commande la seconde bobine du relais 14 à travers un calibreur 24. Le calibreur 24 limite la durée de l'impulsion électrique qui commande la seconde bobine de fermeture du relais 14.

La seconde référence 22 étant supérieure à la première référence 21, la sortie du premier comparateur 19 passe à l'état bas avant que la sortie du second comparateur 20 passe à l'état haut lorsque la tension d'alimentation augmente. Les comparateurs 19 et 20 ont un fonctionnement similaire à un comparateur à hystérésis.

Les sorties des comparateurs 19 et 20 sont connectées à des entrées d'une bascule 25 de type RS. La sortie de cette bascule 25 est connectée au circuit de traitement 6 pour empêcher la commande du relais 7 lorsque la tension d'alimentation n'est pas suffisante et que le relais 14 à provoquer l'ouverture des contacts. Cette liaison entre le dispositif de surveillance d'alimentation 15 et le circuit de traitement 6 permet d'éviter des aléas de fonctionnement lorsque la tension d'alimentation baisse.

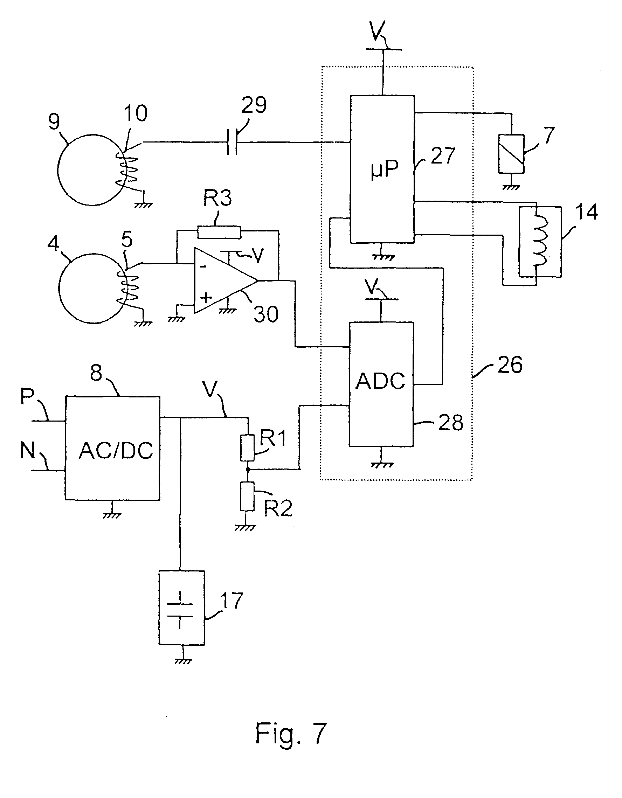

Le schéma de la figure 7 représente un second mode de réalisation particulier d'un circuit électronique pouvant être mis en oeuvre dans des dispositifs de protection selon l'invention. Dans ce mode de réalisation, les fonctions réalisées par l'unité de traitement 12 et le dispositifs de surveillance de l'alimentation sont intégrées dans un micro-contrôleur 26.

Le micro-contrôleur 26 comporte un microprocesseur 27 et un convertisseur analogique-numérique 28. Le microprocesseur 27 comporte une sortie fournissant un signal alternatif à travers un condensateur 29 à l'enroulement 10 du transformateur 9. Le relais 7 est connecté entre une sortie du microprocesseur et la masse. Le relais 14 est connecté entre deux sorties du microprocesseur.

Ce type de connexion permet de commander le relais en inversant la polarité de la tension de commande de la bobine. Des relais bistables polarisés permettent d'ouvrir des contacts selon une première polarité de commande et de fermer les contacts en inversant la polarité d'une impulsion de commande.

Le convertisseur 28 a une première et une seconde entrées analogiques recevant respectivement une tension représentative d'un courant de défaut et une tension représentative de la tension d'alimentation de la ligne V.

Le secondaire 5 du transformateur 4 est connecté à l'entrée inverseuse d'un amplificateur 30. La contre réaction de l'amplificateur est assurée par une résistance R3 connectée entre la sortie de l'amplificateur 30 et son entrée inverseuse. Ce montage transforme le courant fourni par le transformateur en tension représentative d'un courant de défaut. La sortie de l'amplificateur 30 est connectée à la première entrée du convertisseur 28.

Le point commun, du pont résistif réalisé par R1 et R2, est connecté à la seconde entrée du convertisseur 28 pour fournir une tension représentative de la tension d'alimentation.

La sortie du convertisseur est connectée à une entrée du microprocesseur pour fournir des signaux numérisés représentatifs d'un courant de défaut et de la tension d'alimentation. Le microprocesseur effectue l'ensemble des fonctions de traitement et de surveillance pour commander les relais 7 et 14 de déclenchement et de commande.

Les dispositifs de protection différentielle décrits ci-dessus sont, par exemple, des disjoncteurs ou interrupteurs bipolaires, mais il est bien évident que l'invention s'applique aussi aux disjoncteurs et aux interrupteurs tripolaires ou tétrapolaires.

Lorsque les dispositifs de protection différentielle ont deux transformateurs de courant, la détection de défauts entre un conducteur principal et la terre peut se faire aussi sur un réseau à courant continu. Dans ce cas, le circuit d'alimentation 8 transforme une tension continue d'entrée en une tension d'alimentation également continue.

Dans les modes de réalisation décrits ci-dessus, une seule tension d'alimentation V est représentée. Cependant, l'invention peut concerner aussi des dispositifs de protection différentielle ayant plusieurs tensions d'alimentation.

Les tensions d'alimentations auxiliaires peuvent alimenter, en plus des circuits de traitement et de surveillance, des circuit électroniques supplémentaires tels que des dispositifs de visualisation, d'affichage, de communication ou de contrôle de charges connectées au réseau.

## Revendications

1. Dispositif de protection différentielle comportant des contacts (2) principaux pour interrompre la circulation de courant électrique dans des conducteurs principaux (3, P, N) d'un réseau, un capteur (4) de courant de défaut différentiel disposé sur les conducteurs principaux, une unité de traitement (6, 12) connectée au capteur de courant de défaut, un relais (7) de déclenchement connecté à l'unité de traitement commandant l'ouverture des contacts principaux si un défaut différentiel apparaît, et un circuit (8) d'alimentation connecté aux conducteurs principaux et à l'unité de traitement pour fournir une tension (V) électrique d'alimentation à l'unité de traitement,
dispositif de protection différentielle **caractérisé en ce qu'**il comporte :
- un dispositif (15) de surveillance connecté au circuit d'alimentation pour surveiller la tension (V) d'alimentation fournie à l'unité de traitement, et
- un relais (14) de commande connecté au dispositif de surveillance pour commander, en fonction de la tension d'alimentation de l'unité de traitement, l'ouverture et la fermeture de contacts (2, 13) disposés sur le circuit principal.

2. Dispositif de protection différentielle selon la revendication 1, **caractérisé en ce que** la fermeture du circuit principal par le relais de commande (14) est empêchée si l'ouverture dudit circuit principal est effectuée par le relais de déclenchement (7).

3. Dispositif de protection différentielle selon l'une des revendications 1 ou 2, **caractérisé en ce que** le dispositif (15) de surveillance comporte des moyens de comparaison (19, 20, 27), connectés au circuit (8) d'alimentation et au relais (14) de commande, pour commander l'ouverture de contacts (2, 13) du circuit principal si la tension d'alimentation (V) est inférieure à un premier seuil prédéterminé ou pour commander la fermeture desdits contacts si ladite tension est supérieure à un second seuil prédéterminé.

4. Dispositif de protection différentielle selon l'une quelconque des revendications 1 à 3, **caractérisé en ce qu'**il comporte des moyens de stockage (17) d'énergie électrique connectés au circuit d'alimentation.

5. Dispositif de protection différentielle selon l'une quelconque des revendications 1 à 4 **caractérisé en ce que** le relais de déclenchement actionne des premiers contacts (7) principaux, et que le relais de commande actionne des seconds contacts (13) principaux connectés en série avec les premiers contacts principaux et les conducteurs du circuit principal.

6. Dispositif de protection différentielle selon l'une quelconque des revendications 1 à 4 **caractérisé en ce que** le relais (7) de déclenchement et le relais de commande (14) actionnent les mêmes contacts (2) principaux à travers un dispositif de verrouillage (16), le dispositif de verrouillage empêchant la fermeture des contacts principaux par le relais de commande si l'ouverture a été commandée par le relais de déclenchement, ou la fermeture par un organe de manoeuvre manuelle si le relais de commande et en commande d'ouverture.

7. Dispositif de protection différentielle selon la revendication 6 **caractérisé en ce que** les contacts principaux (2) ont une position fermée, une première position ouverte (OP1) où l'écartement des contacts principaux est à une première distance, et une seconde position ouverte (OP2) où l'écartement des contacts principaux est à une seconde distance, la première position ouverte étant commandée par le relais de commande (14) et la seconde position ouverte étant provoquée par le relais de déclenchement (7).

8. Dispositif de protection différentielle selon l'une quelconque des revendications 1 à 7 **caractérisé en ce que** le relais (14) de commande est de type bistable.

9. Dispositif de protection différentielle selon l'une quelconque des revendications 1 à 8 **caractérisé en ce qu'**il comporte des moyens de blocage (25) connectés entre le dispositif de surveillance (15) et l'unité de traitement (12) pour empêcher la commande du relais de déclenchement (7) si la tension d'alimentation devient inférieure au premier seuil prédéterminé.

10. Dispositif de protection différentielle selon l'une quelconque des revendications 1 à 9 **caractérisé en ce qu'**il comporte un micro-contrôleur (26) comportant un microprocesseur (27) et un convertisseur analogique-numérique (28), le convertisseur comportant une première entrée connectée au circuit d'alimentation pour recevoir un signal représentatif de la tension d'alimentation, une seconde entrée connectée au capteur (4, 5) de courant différentiel à travers un convertisseur courant-tension (30, R3), et une sortie connectée à une entrée du microprocesseur, le microprocesseur comportant une sortie connectée au relais de déclenchement, et une sortie connectée au relais de commande.

11. Dispositif de protection différentielle selon la revendication 10 **caractérisé en ce que** le microprocesseur comporte une sortie connectée à un enroulement (10) d'un transformateur (9) d'injection de courant de mesure dans les conducteurs principaux (3, P, N).

## Claims

1. A differential protection device comprising main contacts (2) to interrupt the flow of electrical current in main conductors (3, P, N) of a power system, a differential fault current sensor (4) arranged on the main conductors, a processing unit (6, 12) connected to the fault current sensor, a trip relay (7) connected to the processing unit commanding opening of the main contacts if a differential fault occurs, and a power supply circuit (8) connected to the main conductors and to the processing unit to supply an electrical supply voltage (V) to the processing unit,
differential protection device **characterized in that** it comprises:
- a monitoring device (15) connected to the power supply circuit to monitor the supply voltage (V) supplied to the processing unit, and
- a control relay (14) connected to the monitoring device to command opening and closing of the contacts (2, 13) arranged on the main circuit according to the supply voltage of the processing unit.

2. Differential protection device according to claim 1, **characterized in that** closing of the main circuit by the control relay (14) is prevented if opening of said main circuit is performed by the trip relay (7).

3. Differential protection device according to one of the claims 1 or 2, **characterized in that** the monitoring device (15) comprises comparison means (19, 20, 27), connected to the power supply circuit (8) and to the control relay (14), to command opening of the contacts (2, 13) of the main circuit if the supply voltage (V) is lower than a first preset threshold or to command closing of said contacts if said voltage is higher than a second preset threshold.

4. Differential protection device according to one of the claims 1 to 3, **characterized in that** it comprises means (17) for storing electrical power connected to the power supply circuit.

5. Differential protection device according to any one of the claims 1 to 4, **characterized in that** the trip relay actuates first main contacts (7), and that the control relay actuates second main contacts (13) connected in series with the first main contacts and the conductors of the main circuit.

6. Differential protection device according to any one of the claims 1 to 4, **characterized in that** the trip relay (7) and the control relay (14) actuate the same main contacts (2) via a latching device (16), the latching device preventing closing of the main contacts by the control relay if opening was commanded by the trip relay, or closing by a manual operating means if the control relay is on opening control.

7. Differential protection device according to claim 6, **characterized in that** the main contacts (2) have a closed position, a first open position (OP1) where the distance between the main contacts is a first distance, and a second open position (OP2) where the distance between the main contacts is a second distance, the first open position being commanded by the control relay (14) and the second open position being caused by the trip relay (7).

8. Differential protection device according to any one of the claims 1 to 7, **characterized in that** the control relay (14) is of the bistable type.

9. Differential protection device according to any one of the claims 1 to 8, **characterized in that** it comprises disabling means (25) connected between the monitoring device (15) and the processing unit (12) to prevent command of the trip relay (7) if the supply voltage drops below the first preset threshold.

10. Differential protection device according to any one of the claims I to 9, **characterized in that** it comprises a microcontroller (26) comprising a microprocessor (27) and an analog-to-digital converter (28), the converter comprising a first input connected to the power supply circuit to receive a signal representative of the supply voltage, a second input connected to the differential current sensor (4, 5) via a current-voltage converter (30, R3), and an output connected to an input of the microprocessor, the microprocessor comprising an output connected to the trip relay and an output connected to the control relay.

11. Differential protection device according to claim 10, **characterized in that** the microprocessor comprises an output connected to a winding (10) of a transformer (9) for inputting measurement current to the main conductors (3, P, N).

## Patentansprüche

1. Differenzstromschutzeinrichtung mit Hauptkontakten (2) zur Unterbrechung des elektrischen Stromflusses in Hauptleitern (3, P, N) eines Netzes, mit einem auf den Hauptleitern installierten Differenzfehlerstromwandler (4), einer mit dem Differenzfehlerstromwandler verbundenen Verarbeitungseinheit (6, 12), einem mit der Verarbeitungseinheit verbundenen Auslöserelais (7), das bei Auftreten eines Differenzstromfehlers die Abschaltung der Hauptkontakte steuert, sowie einer mit den Hauptleitern und der Verarbeitungseinheit verbundenen Stromversorgungsschaltung (8) zur Lieferung einer elektrischen Versorgungsspannung (V) an die Verarbeitungseinheit,
welche Differenzstromschutzeinrichtung **dadurch gekennzeichnet ist, daß** sie
- eine mit der Stromversorgungsschaltung verbundene Überwachungseinrichtung (15) zur Überwachung der an die Verarbeitungseinheit gelieferten Versorgungsspannung (V) sowie
- ein an die Überwachungseinrichtung angeschlossenes Steuerrelais (14) zur Steuerung der Abschaltung bzw. Einschaltung der in den Hauptstromkreis geschalteten Kontakte (2, 13) in Abhängigkeit von der Versorgungsspannung der Verarbeitungseinheit umfaßt.

2. Differenzstromschutzeinrichtung nach Anspruch 1, **dadurch gekennzeichnet, daß** die Einschaltung des Hauptstromkreises durch das Steuerrelais (14) vethindert wird, wenn die Abschaltung des genannten Hauptstromkreises durch das Auslöserelais (7) erfolgt ist.

3. Differenzstromschutzeinrichtung nach einem der Ansprüche 1 oder 2, **dadurch gekennzeichnet, daß** die Überwachungseinrichtung (15) mit der Stromversorgungsschaltung (8) und dem Steuerrelais (14) verbundene Vergleichsmittel (19, 20, 27) umfaßt, um die Abschaltung der Kontakte (2, 13) des Hauptstromkreises zu steuern, wenn die Versorgungsspannung (V) unter einem ersten festgelegten Schwellwert liegt, bzw. um die Einschaltung der genannten Kontakte zu steuern, wenn die genannte Spannung über einem zweiten festgelegten Schwellwert liegt.

4. Differenzstromschutzeinrichtung nach irgendeinem der Ansprüche 1 bis 3, **dadurch gekennzeichnet, daß** sie mit der Stromversorgungsschaltung verbundene Speichermittel (17) zur Speicherung der elektrischen Energie umfaßt.

5. Differenzstromschutzeinrichtung nach irgendeinem der Ansprüche 1 bis 4, **dadurch gekennzeichnet, daß** das Auslöserelais erste Hauptkontakte (2) betätigt und daß das Steuerrelais mit den ersten Hauptkontakten sowie den Leitern des Hauptstromkreises in Reihe geschaltete zweite Hauptkontakte (13) betätigt.

6. Differenzstromschutzeinrichtung nach irgendeinem der Ansprüche 1 bis 4, **dadurch gekennzeichnet, daß** das Auslöserelais (7) und das Steuerrelais (14) über eine Verriegelungseinrichtung (16) die gleichen Hauptkontakte (2) betätigen, wobei die Verriegelungseinrichtung das Einschalten der Hauptkontakte durch das Steuerrelais verhindert, wenn die Abschaltung durch das Auslöserelais gesteuert wurde, bzw. das Einschalten durch ein Handbetätigungsorgan verhindern, wenn das Steuerrelais auf Abschaltsteuerung steht.

7. Differenzstromschutzeinrichtung nach Anspruch 6, **dadurch gekennzeichnet, daß** die Hauptkontakte (2) eine Einschaltstellung, eine erste Ausschaltstellung (OP1) mit einem ersten Trennabstand zwischen den Hauptkontakten und eine zweite Ausschaltstellung (OP2) mit einem zweiten Trennabstand zwischen den Hauptkontakten aufweisen, wobei die erste Ausschaltstellung über das Steuerrelais (14) gesteuert wird und die zweite Ausschaltstellung durch das Auslöserelais (7) bewirkt wird.

8. Differenzstromschutzeinrichtung nach irgendeinem der Ansprüche 1 bis 7, **dadurch gekennzeichnet, daß** das Steuerrelais (14) als bistabiles Relais ausgebildet ist.

9. Differenzstromschutzeinrichtung nach irgendeinem der Ansprüche 1 bis 8, **dadurch gekennzeichnet, daß** sie zwischen die Überwachungseinrichtung (15) und die Verarbeitungseinheit (12) geschaltete Blockiermittel (25) umfaßt, um die Ansteuerung des Auslöserelais (7) zu verhindern, wenn die Versorgungsspannung unter den ersten festgelegten Schwellwert sinkt.

10. Differenzstromschutzeinrichtung nach irgendeinem der Ansprüche 1 bis 9, **dadurch gekennzeichnet, daß** sie einen Mikrocontroller (26) mit einem Mikroprozessor (27) und einem Analog-Digital-Umsetzer (28) umfaßt, wobei der A/D-Umsetzer einen mit der Stromversorgungsschaltung verbundenen ersten Eingang zur Aufnahme eines die Versorgungspannung abbildenden Signals, einen über einen Strom-Spannungs-Wandler (30, R3) mit dem Differenzstromwandler (4, 5) verbundenen zweiten Eingang sowie einen mit einem Eingang des Mikroprozessors verbundenen Ausgang umfaßt und der Mikroprozessor einen mit dem Auslöserelais verbundenen Ausgang sowie einen mit dem Steuerrelais verbundenen Ausgang umfaßt.

11. Differenzstromschutzeinrichtung nach Anspruch 10, **dadurch gekennzeichnet, daß** der Mikroprozessor einen Ausgang umfaßt, der mit einer Wicklung (10) eines Stromwandlers (9) zur Injizierung eines Meßstroms in die Hauptleiter (3, P, N) verbunden ist.
